# FASCICULE DE BREVET EUROPEEN

(11) **EP 3 701 697 B1**
(45) Date de publication et mention de la délivrance du brevet: **02.03.2022**
(21) Numéro de dépôt: 18804037.2
(22) Date de dépôt: 16.10.2018
(51) Int. Cl.: H04L 29/06

(54) **PROCÉDÉ ET ENTITÉ DE GESTION D'UNE SESSION MULTIMÉDIA ENTRE UN TERMINAL APPELANT ET AU MOINS UN TERMINAL APPELÉ, TERMINAL ET PROGRAMME D'ORDINATEUR CORRESPONDANTS**
VERFAHREN UND VORRICHTUNG ZUR VERWALTUNG EINER MULTIMEDIASITZUNG ZWISCHEN EINEM ANRUFENDEN ENDGERÄT UND MINDESTENS EINEM ANGERUFENEN ENDGERÄT, ENTSPRECHENDES ENDGERÄT UND COMPUTERPROGRAMM
METHOD AND ENTITY FOR MANAGING A MULTIMEDIA SESSION BETWEEN A CALLING TERMINAL AND AT LEAST ONE CALLED TERMINAL, CORRESPONDING TERMINAL AND COMPUTER PROGRAM

(30) Priorité: 27.10.2017 FR 1760201
(43) Date de publication de la demande: 02.09.2020
(73) Titulaire: ORANGE, 92130 Issy-les-Moulineaux (FR)
(72) Inventeur: DOREE, José, 92326 Châtillon Cedex (FR); LE ROUZIC, Jean-Claude, 92326 Châtillon Cedex (FR)
(74) Mandataire: Vidon Brevets & Stratégie
(86) Numéro de dépôt international: PCT/FR2018/052573
(87) Numéro de publication internationale: WO 2019/081836

(56) Documents cités:
- WO-A1-2012/042150

## Description

### 1. Domaine de l'invention

Le domaine de l'invention est celui des communications multimédia au sein d'un réseau.

Plus précisément, l'invention offre une solution pour la gestion d'une session multimédia, et notamment la sélection, pendant une phase préalable à l'établissement d'une communication, des flux média autorisés pendant cette phase. On entend notamment par flux média un flux associé à un type de média, comme un flux audio, un flux vidéo, un flux portant des données de type application, un flux portant des données de type texte, un flux portant des données de type image, etc.

Les flux média échangés pendant la phase préalable à l'établissement d'une communication, par exemple reçus par un appelant avant que l'appelé ne décroche, sont appelés flux « early media ». L'invention s'applique notamment à la diffusion de tels flux « early media ».

L'invention trouve notamment, mais non exclusivement, des applications dans les réseaux IMS (en anglais « IP Multimedia Subsystem », en français « sous-système IP multimédia »), utilisant le protocole de signalisation SIP (en anglais « Session Initiation Protocol », en français « protocole d'initiation de session ») pour la gestion des sessions multimédia.

Dans les réseaux IMS, la phase préalable à l'établissement d'une communication, au cours de laquelle les flux « early média » sont diffusés, désigne classiquement la phase comprise entre l'émission d'un message d'invitation SIP INVITE par le terminal appelant et la réception par ce terminal appelant d'une réponse SIP finale, par exemple une réponse positive 200 OK.

### 2. Art antérieur

Certains services, notamment des services téléphoniques, nécessitent la diffusion d'un ou plusieurs flux média avant l'établissement d'une communication. On peut citer en exemple les attentes avec musique, les annonces indiquant les informations tarifaires du service consulté (par exemple pour la météo, l'horloge parlante, ou les aéroports de Paris).

Ce type de service nécessite parfois une interaction avec l'usager appelant, par exemple pour mettre fin au film en cours de diffusion ou pour aiguiller l'usager appelant vers un correspondant particulier.

Il existe aujourd'hui, dans la signalisation SIP, un entête appelé « P-Early-Media », ou PEM, permettant au réseau de contrôler la diffusion des flux média d'un type donné et d'indiquer dans les messages de progression d'appel si des flux média doivent être « ouverts », i.e. autorisés ou non, préalablement à l'établissement d'une communication. Un tel entête PEM est notamment défini dans le document RFC 5009.

Malheureusement, un tel entête n'est pas toujours suffisant pour définir les flux média autorisés ou non, avant l'établissement de la communication. En effet, sa portée s'applique à l'ensemble des flux média, ou à l'ensemble des flux média d'un type donné, décrits dans un champ de description de la session multimédia, par exemple un champ SDP (en anglais « Session Description Protocol »), ce qui peut s'avérer insuffisant.

A titre d'exemple, on considère une session multimédia de type visiophonie (i.e. communication audio et vidéo), au cours de laquelle un correspondant peut être mis en relation avec un serveur vocal interactif pendant la phase préalable à l'établissement de la communication (par exemple la phase de sonnerie). Selon cet exemple, un tel serveur vocal interactif autorise l'émission (en anglais « send ») et la réception (en anglais « receive ») de flux audio, uniquement codés en utilisant un codec audio de type AMR (en anglais « Adaptive Multi-Rate », en français « adaptatif multi-débit »). La portée de l'entête PEM s'appliquant à l'ensemble des flux média d'un type donné, le terminal appelant peut commencer à émettre vers le réseau des flux audio codés en utilisant un autre codec audio, comme l'AMR-WB ou le G.723, alors que les flux audio ainsi codés ne peuvent pas être interprétés par le serveur interactif, et chargent donc inutilement le réseau.

WO 2012/042150 divulgue un procédé de gestion de la priorité de flux média préliminaires. Ce procédé peut être mis en œuvre par un terminal appelé dans un réseau IMS. Il comporte : - une étape (E10) de réception d'un message SIP INVITE émis par un terminal appelant pour établir une communication entre lesdits terminaux ; - préalablement à un établissement éventuel de ladite communication, une étape (E30) d'envoi d'une réponse SIP de type 18x destinée à informer ledit terminal appelant que ledit terminal appelé a été alerté, ladite réponse comportant un message SDP comportant des caractéristiques d'un flux média préliminaire susceptible d'être établi entre ledit terminal appelant et ledit terminal appelé avant l'établissement de ladite communication ; et - une étape (E20) d'insertion, dans ladite réponse SIP, d'un indicateur (IND) de priorité dudit flux média préliminaire.

Il existe donc un besoin pour une nouvelle technique permettant de définir les flux média autorisés pendant la phase préalable à l'établissement d'une communication.

### 3. Exposé de l'invention

L'invention concerne un procédé, tel que défini plus précisément dans la revendication 1, un procédé, tel que défini plus précisément dans la revendication 7, une entité, telle que définie plus précisément dans la revendication 8, un terminal, tel que défini plus précisément dans la revendication 9, un programme informatique, tel que défini dans la revendication 10, et un support d'informations, tel que défini en outre dans la revendication 11.

L'invention propose une solution nouvelle pour la gestion d'une session multimédia entre un terminal appelant et au moins un terminal appelé, ladite session multimédia comprenant une phase préalable à l'établissement d'une communication et une phase de communication.

Selon l'invention, un tel procédé met en œuvre, pendant la phase préalable à l'établissement de la communication :
- la réception d'un message d'invitation généré par un terminal appelant, le message d'invitation comprenant un champ de description de la session multimédia portant des informations relatives à un ensemble de flux média, et
- la génération d'une réponse au message d'invitation, la réponse comprenant un entête portant au moins un type de média et au moins un premier paramètre de communication applicable à au moins un flux média dudit type, parmi ledit ensemble de flux média.

Ainsi, pour une session multimédia, il est possible de définir dans cet entête le ou les types de média (par exemple audio, vidéo, texte, application, image, etc.) autorisés à être échangés pendant la phase préalable à l'établissement d'une communication, ainsi que leur direction.

Par exemple, la solution proposée permet d'indiquer dans l'entête que l'on souhaite autoriser / activer les flux audio dans les deux directions émission / réception (« sendrecv »), sans pour autant autoriser de flux vidéo, ou encore n'autoriser qu'un codec particulier d'un ensemble de codecs d'un type de média donné.

Si l'on se place dans le contexte d'un réseau IMS utilisant le protocole de signalisation SIP, le message d'invitation est un message de type SIP INVITE, le champ de description est de type SDP, et l'entête est de type P-Early-Media.

La solution proposée repose sur une modification de la sémantique de l'entête PEM, permettant d'indiquer dans l'entête PEM le type de flux média autorisé ou non, ainsi que sa direction.

On rappelle que selon l'art antérieur, la portée de l'entête PEM s'applique à l'ensemble des flux média d'un type donné décrits dans le champ SDP. En d'autres termes, on ne peut pas, selon l'art antérieur, sélectionner un flux particulier parmi un ensemble de flux d'un même type, par exemple pour autoriser ou interdire la diffusion de ce flux. De plus, la solution proposée présente notamment l'avantage de ne pas faire dépendre l'entête PEM de l'ordre des flux média dans le champ de description SDP. Ainsi, si une entité quelconque dans le chemin de signalisation vient modifier le champ de description SDP, il n'est pas nécessaire de modifier l'entête PEM selon l'invention.

Selon un mode de réalisation particulier, ledit entête porte également au moins un paramètre d'identification permettant d'identifier un flux média particulier parmi ledit au moins un flux média dudit type.

Ainsi, il est possible d'identifier, dans l'entête, un ou plusieurs flux spécifiques à l'intérieur d'un type de média (par exemple paroles, DTMF (en anglais « dual-tone multi-frequency », en français « tonalité multi-fréquence à deux tons »), etc.). On rappelle à cet égard qu'un « code DTMF » est une combinaison de fréquences utilisée pour la téléphonie fixe classique (sauf Voix sur IP) ; les codes DTMF sont émis lors de la pression sur une touche du clavier téléphonique, et sont utilisés pour la composition des numéros de téléphone (en opposition aux anciens téléphones dits à impulsions, utilisant un cadran) ainsi que pour la communication avec les serveurs vocaux interactifs.

Pour un type de média donné (par exemple audio), il est ainsi possible d'identifier un flux spécifique (par exemple le flux « telephone-event ») à l'intérieur d'une description de média donnée, et d'autoriser ou non ce flux spécifique. Par exemple, il est possible d'autoriser l'émission des informations de DTMF du média audio de manière bidirectionnelle quand les autres flux audio restent unidirectionnels. Dans ce cas, le premier paramètre de communication peut caractériser ce flux spécifique, et peut donc s'appliquer à un flux donné parmi N flux pour un type de média donné.

Par exemple, un tel paramètre d'identification appartient au groupe comprenant :
- un nom associé au flux média, par exemple le nom de son codec : AMR, telephone-event, H263, etc. ; et
- un numéro associé audit flux média, par exemple son numéro de flux RTP (en anglais « Real-time Transport Protocol », en français « protocole de transport temps réel »), encore appelé « payload type » : 110, 118, 96, etc.

Selon un mode de réalisation particulier, ledit entête porte également au moins un deuxième paramètre de communication, applicable à l'ensemble de flux média.

Autrement dit, l'entête comprend au moins un paramètre de communication applicable à l'ensemble de flux média, dit deuxième paramètre de communication, et au moins un paramètre de communication applicable à un type de flux média, ou à un flux média particulier de ce type de flux média, dit premier paramètre de communication.

Si l'on se place dans le contexte d'un réseau IMS utilisant le protocole SIP, on conserve donc la sémantique actuelle de l'entête PEM, avec un paramètre « global » s'appliquant à la totalité de la réponse SDP (deuxième paramètre de communication). Le ou les paramètres ajoutés selon l'invention (premier paramètre de communication) permettent de préciser, par média, les différences par rapport au paramètre « global ».

On assure ainsi la compatibilité d'une entité du réseau apte à mettre en œuvre l'invention, avec les entités du réseau de l'art antérieur.

En particulier, le premier paramètre de communication (et le deuxième paramètre de communication, s'il est prévu dans l'entête) appartient au groupe comprenant :
- communication inactive (« inactive » selon le document RFC5009) ;
- communication en émission uniquement (« sendonly » selon le document RFC5009) ;
- communication en réception uniquement (« recvonly » selon le document RFC5009) ; et
- communication en émission et en réception (« sendrecv » selon le document RFC5009).

L'entête PEM peut ainsi prendre les valeurs définies dans le document RFC 5009 pour autoriser ou non un flux média avant l'établissement d'une communication et pour préciser dans quelle direction ce ou ces flux média peuvent être établis.

Dans un autre mode de réalisation, l'invention concerne une entité de gestion d'une session multimédia entre un terminal appelant et au moins un terminal appelé, ladite session multimédia comprenant une phase préalable à l'établissement d'une communication et une phase de communication, ladite entité comprenant une machine de calcul reprogrammable ou une machine de calcul dédiée, configurée pour :
- recevoir un message d'invitation généré par un terminal appelant, ledit message d'invitation comprenant un champ de description de ladite session multimédia, portant des informations relatives à un ensemble de flux média, et
- générer une réponse audit message d'invitation, ladite réponse comprenant un entête portant au moins un type de média et au moins un premier paramètre de communication applicable, pendant ladite phase préalable à l'établissement de la communication, à au moins un flux média dudit type, parmi ledit ensemble de flux média.

Une telle entité est notamment adaptée à mettre en œuvre le procédé de gestion d'une session multimédia décrit précédemment. Ainsi, une telle entité peut comporter les différentes caractéristiques relatives au procédé de gestion d'une session multimédia selon l'invention, qui peuvent être combinées ou prises isolément.

En particulier, une telle entité est une entité de confiance d'un réseau de communication, apte à insérer ou modifier un entête de type PEM. Il s'agit par exemple d'un serveur d'application AS, d'un proxy P-CSCF ou d'un serveur S-CSCF (en anglais « Proxy / Serving Call Session Control Flow », en français « Fonction de Commande de Session d'Appel Mandataire/Fonction de Commande de Session d'Appel Serveuse »), d'une passerelle IBCF (en anglais « Interconnect Border Control Function », en français « Fonction de Commande de Bordure d'Interconnexion »).

Une telle entité peut notamment comprendre des moyens physiques et/ou logiciels.

L'invention concerne également un procédé d'établissement d'une session multimédia entre un terminal appelant et au moins un terminal appelé, ladite session multimédia comprenant une phase préalable à l'établissement d'une communication et une phase de communication.

Un tel procédé met en œuvre, pendant ladite phase préalable à l'établissement de la communication :
- la génération d'un message d'invitation comprenant un champ de description de ladite session multimédia, portant des informations relatives à un ensemble de flux média,
- la réception d'une réponse audit message d'invitation, et
- la sélection d'au moins un flux média à utiliser pendant la phase préalable à l'établissement de la communication, en tenant compte d'un entête de ladite réponse portant au moins un type de média et au moins un premier paramètre de communication applicable à au moins un flux média dudit type, parmi ledit ensemble de flux média.

De cette façon, une entité du réseau, notamment le terminal appelant, peut adapter sa transmission aux média acceptés par le réseau, dès la phase préalable à l'établissement de la communication, en sélectionnant au moins un flux média à utiliser pour la session (i.e. pour la phase préalable à l'établissement de la communication).

La solution proposée permet ainsi d'éviter de surcharger inutilement le réseau.

Dans un autre mode de réalisation, l'invention concerne un terminal appelant destiné à établir une session multimédia avec au moins un terminal appelé, ladite session multimédia comprenant une phase préalable à l'établissement d'une communication et une phase de communication, ledit terminal comprenant une machine de calcul reprogrammable ou une machine de calcul dédiée, configurée pour :
- générer un message d'invitation comprenant un champ de description de ladite session multimédia, portant des informations relatives à un ensemble de flux média,
- recevoir une réponse audit message d'invitation, et
- sélectionner au moins un flux média à utiliser pendant la phase préalable à l'établissement de la communication, en tenant compte d'un entête de ladite réponse portant au moins un type de média et au moins un premier paramètre de communication applicable à au moins un flux média dudit type, parmi ledit ensemble de flux média.

Un tel terminal appelant est notamment adapté à mettre en œuvre le procédé d'établissement d'une session multimédia décrit précédemment. Ainsi, un tel terminal peut comporter les différentes caractéristiques relatives au procédé d'établissement d'une session multimédia selon l'invention, qui peuvent être combinées ou prises isolément.

Un tel terminal peut notamment comprendre des moyens physiques et/ou logiciels.

Dans un autre mode de réalisation, l'invention concerne un ou plusieurs programmes d'ordinateur comportant des instructions pour la mise en œuvre d'au moins un procédé tel que décrit ci-dessus, lorsque ce ou ces programmes sont exécutés par un processeur.

Dans encore un autre mode de réalisation, l'invention concerne un ou plusieurs supports d'informations, inamovibles, ou partiellement ou totalement amovibles, lisibles par un ordinateur, et comportant des instructions d'un ou plusieurs programmes d'ordinateur pour l'exécution des étapes d'au moins un procédé tel que décrit ci-dessus.

Les procédés selon l'invention peuvent donc être mis en œuvre de diverses manières, notamment sous forme câblée et/ou sous forme logicielle.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre les principales étapes mises en œuvre pour l'établissement et la gestion d'une session multimédia selon un mode de réalisation particulier de l'invention ;
- la figure 2 présente un chronogramme illustrant les messages échangés entre les différentes entités d'un réseau de communication pour l'établissement d'une communication ; et
- les figures 3 et 4 présentent respectivement la structure simplifiée d'un terminal appelant et la structure simplifiée d'une entité du réseau de communication localisée entre le terminal appelant et au moins un terminal appelé.

### 5. Description d'un mode de réalisation de l'invention

### 5.1 Principe général

Le principe général de l'invention repose sur la sélection des flux média autorisés pendant la phase préalable à l'établissement d'une communication.

Pour ce faire, l'invention propose de générer un entête spécifique, permettant de définir la granularité nécessaire à la sélection d'un flux média particulier à l'intérieur d'un type de média donné.

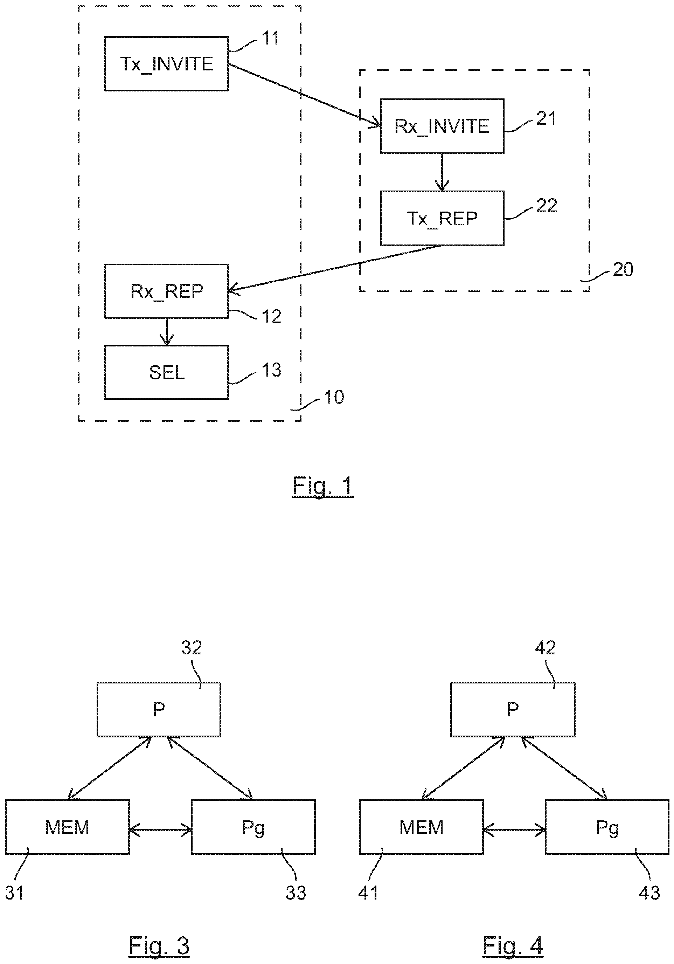

On présente, en relation avec la figure 1, les principales étapes mises en œuvre pour l'établissement et la gestion d'une session multimédia entre un terminal appelant et au moins un terminal appelé. On considère qu'une telle session multimédia comprend deux phases : une phase préalable à l'établissement d'une communication, au cours de laquelle les flux média sont négociés, et une phase de communication. Les étapes décrites en relation avec la figure 1 sont mises en œuvre au cours de la phase préalable à l'établissement d'une communication.

Afin d'initier la session multimédia, le terminal appelant 10 génère un message d'invitation (Tx_INVITE, 11) comprenant un champ de description de la session multimédia. Un tel champ porte des informations relatives à un ensemble de flux média.

Un tel message d'invitation est reçu par au moins une entité 20 du réseau localisée entre le terminal appelant et au moins un terminal appelé (Rx_INVITE, 21).

A réception du message d'invitation, l'entité 20 du réseau génère une réponse au message d'invitation (Tx_REP, 22). Une telle réponse comprend un entête portant au moins un type de média et au moins un premier paramètre de communication applicable à au moins un flux média dudit type, parmi l'ensemble de flux média.

Le terminal appelant 10 reçoit la réponse au message d'invitation en provenance l'entité du réseau 20 (Rx_REP, 12) sélectionne au moins un flux média à utiliser pour la phase préalable à l'établissement de la communication, en tenant compte de l'entête de ladite réponse (SEL, 13). Le terminal appelant 10 analyse donc l'entête de la réponse reçue pour pouvoir adapter sa transmission de flux média aux spécifications imposées par l'entête.

### 5.2 Description d'un mode de réalisation particulier

On décrit ci-après plus en détail un exemple de mise en œuvre de l'invention pour la diffusion de flux « early média » dans des réseaux IMS. Dans ce contexte, le message d'invitation est un message de type SIP INVITE, le champ de description est de type SDP, et l'entête est de type P-Early-Media ou PEM.

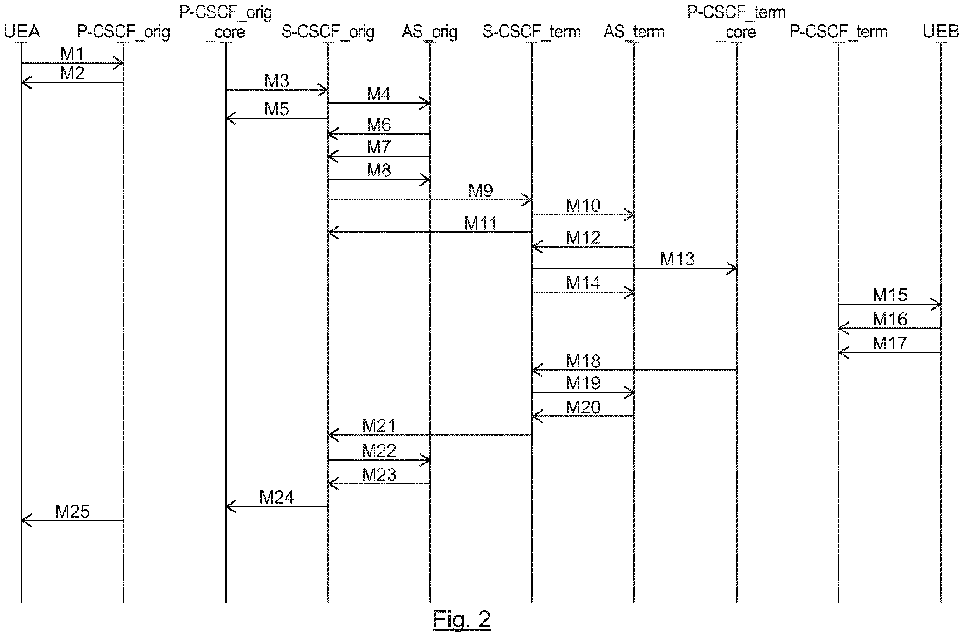

Afin d'illustrer l'invention, on présente, en relation avec la figure 2, un chronogramme illustrant l'établissement et la gestion d'une session multimédia de type visioconférence entre un terminal appelant et au moins un terminal appelé, et plus précisément les messages échangés au cours d'une phase préalable à l'établissement d'une communication.

Le terminal appelant UE A génère un message d'invitation M1 comprenant un champ de description de la session multimédia : M1 = INVITE SDP(...).

Par exemple, le champ de description comprend une description d'un ensemble de flux audio (m=audio) et de flux vidéo (m=video), et en particulier des informations liées au(x) codec(s) accepté(s) par le terminal appelant UEA, ainsi que l'adresse IP et le numéro de port sur lequel il souhaite recevoir le ou les flux média.

Un exemple de champ SDP est donné ci-après :
*v=0*
*o=- 6306151 6306151 IN IP4 BC00.QZ27.ORANGE-MSS.FR*
s=-
*c=IN IP4 172.20.1.101*
*t=0 0*
*a=sendrecv*
*m=audio 10464 RTP*/*AVP 118 110*
*b=RR:1087*
*b=RS:362*
*a=rtpmap:118 AMR*/*8000*/*1*
*a=fmtp:118 mode-set=0,2,4,7;mode-change-period=2;mode-change-capability=2;mode-change-neighbor=1;max-red=0*
*a=rtpmap:110 telephone-event*/*8000*
*a=fmtp:110 0-15*
*a=ptime:20*
*a=maxptime:40*
*m=video 32510 RTP*/*AVP 96*
*a=recvonly*
*a=rtpmap:96 H263-2000*/*90000*
*a=framesize:96176-144*
*a=framerate:8*
*a=fmtp:96 profile=0; level=45*

Un tel message d'invitation M1 est reçu par le proxy P-CSCF du réseau IMS du terminal appelant, noté P-CSCF_orig. Le proxy P-CSCF_orig confirme au terminal appelant UEA la réception du message d'invitation par un message M2 : M2 = 100_Trying.

Le proxy P-CSCF_orig dispose également d'une interface réseau, lui permettant d'échanger avec le cœur de réseau, notée P-CSCF_orig_core.

L'interface réseau P-CSCF_orig_core met en forme le message d'invitation et le transmet au serveur S-CSCF du réseau IMS du terminal appelant, noté S-CSCF_orig : M3 = INVITE SDP(...). Le serveur S-CSCF_orig est notamment chargé d'appliquer les déclenchements de services en départ de l'appelant vers les serveurs d'applications respectifs, services tels que OIR (pour « Originating Identification Restriction » - en français « limitation selon l'identification d'origine ») se rapportant à un appel anonyme, ou « Call Barring » (en français « interdiction d'appel ») se rapportant à un service restreint.

Le serveur S-CSCF_orig transmet le message d'invitation au serveur d'application du réseau IMS du terminal appelant, noté AS_orig : M4 = INVITE SDP(...).

Le serveur S-CSCF_orig confirme à l'interface réseau P-CSCF_orig_core la réception du message d'invitation par un message M5 : M5 = 100_Trying.

Le serveur AS_orig confirme au serveur S-CSCF_orig la réception du message d'invitation par un message M6 : M6 = 100_Trying.

Le serveur AS_orig vérifie les services auxquels l'utilisateur du terminal appelant UEA a souscrit, modifie éventuellement la requête pour qu'elle soit conforme aux services souscrits et renvoie au serveur S-CSCF_orig le message d'invitation : M7 = INVITE SDP(...).

Le serveur S-CSCF_orig confirme au serveur AS_orig la réception du message d'invitation par un message M8 : M8 = 100_Trying.

Le serveur S-CSCF_orig contacte alors le serveur I/S-CSCF du réseau IMS du terminal appelé, noté S-CSCF_term (et, dans cet exemple, co-localisé avec le I-CSCF - en anglais « Interrogating-CSCF »), et lui transmet le message d'invitation : M9 = INVITE SDP(...).

Le serveur S-CSCF_term transmet le message d'invitation au serveur d'application du réseau IMS du terminal appelé, noté AS_term : M10 = INVITE SDP(...).

Le serveur S-CSCF_term confirme au serveur S-CSCF_orig la réception du message d'invitation par un message M11 : M11 = 100_Trying.

A réception du message M10, le serveur AS_term vérifie les services auxquels l'utilisateur du terminal appelé UEB a souscrit, modifie éventuellement la requête pour qu'elle soit conforme aux services souscrits et renvoie au serveur S-CSCF_term le message d'invitation : M12 = INVITE SDP(...).

Le serveur S-CSCF_term transmet à l'interface réseau du proxy P-CSCF du réseau IMS du terminal appelé, noté P-CSCF_term_core, le message d'invitation : M13 = INVITE SDP(...).

Le serveur S-CSCF_term confirme également au serveur AS_term la réception du message d'invitation par un message M14 : M14 = 100_Trying.

Le proxy P-CSCF du réseau IMS du terminal appelé, noté P-CSCF_term, transmet au terminal appelé UEB le message d'invitation : M15 = INVITE SDP(...).

Le terminal appelé UEB confirme au proxy P-CSCF_term la réception du message d'invitation par un message M16 : M16 = 100_Trying.

Le terminal appelé UEB génère également un message de réponse portant des informations sur l'avancement de la session : M17 = 183 Session Progress SDP(...).

Ce message de réponse est reçu par le proxy P-CSCF_term.

L'interface réseau P-CSCF_term_core met en forme le message de réponse et le transmet au serveur S-CSCF_term : M18 = 183 Session Progress SDP(...).

Le serveur S-CSCF_term transmet le message de réponse au serveur AS_term : M19 = 183 Session Progress SDP(...).

A réception du message M19, le serveur AS_term vérifie les services auxquels l'utilisateur du terminal appelé UEB a souscrit, modifie éventuellement la réponse pour qu'elle soit conforme aux services souscrits et renvoie au serveur S-CSCF_term le message de réponse : M20 = 183 Session Progress SDP(...).

Le serveur S-CSCF_term transmet le message de réponse au serveur S-CSCF_orig du réseau IMS du terminal appelant : M21 = 183 Session Progress SDP(...).

Le serveur S-CSCF_orig transmet le message de réponse au serveur d'application AS_orig : M22 = 183 Session Progress SDP(...).

Le serveur AS_orig vérifie les services auxquels l'utilisateur du terminal appelant UEA a souscrit, modifie éventuellement la requête pour qu'elle soit conforme aux services souscrits et renvoie au serveur S-CSCF_orig le message de réponse : M23 = 183 Session Progress SDP(...).

Le serveur S-CSCF_orig transmet à l'interface réseau du proxy P-CSCF_orig_core le message de réponse : M24 = 183 Session Progress SDP(...).

Le proxy P-CSCF_orig transmet au terminal appelant le message de réponse : M25 = 183 Session Progress SDP(...).

On note que si le terminal appelant UEA et le terminal appelé UEB appartiennent à des réseaux gérés par des opérateurs distincts, une entité supplémentaire de type passerelle IBCF intervient entre les serveurs S-CSCF orig et S-CSCF_term.

Selon l'exemple illustré en figure 2, l'entête P-Early-Media peut être inséré dans un message de réponse « 183 Session Progress ». En effet, un tel message de réponse est classiquement utilisé pour communiquer des informations sur l'avancement de la session. Un texte explicatif, les champs d'entête et le corps du message peuvent être utilisés pour fournir ces informations.

Dans l'exemple décrit ci-dessus, le champ SDP décrit deux flux audio et un flux vidéo bidirectionnels (a=sendrecv) :
- m=audio 10464 RTP/AVP 118 110 correspond à la description des deux flux audio, reçu sur le port 10464, selon le protocole RTP/AVP, avec le numéro de flux RTP du premier flux audio égal à 118 et le numéro de flux RTP du deuxième flux audio égal à 110 ;
- m=video 32510 RTP/AVP 96 correspond à la description du flux vidéo, reçu sur le port 32510, selon le protocole RTP/AVP, avec le numéro de flux RTP du flux vidéo égal à 96.

Si aucune précision n'est apportée durant la phase d'établissement d'une communication, le terminal appelant peut commencer à envoyer des flux early media de type audio et/ou vidéo selon les différents codecs définis dans le champ SDP, quelles que soient les capacités des autres entités du réseau. Un serveur vocal interactif peut ainsi recevoir des flux vidéo qu'il ne peut pas interpréter.

Selon l'invention, on modifie donc l'entête P-Early-Media de façon à préciser au moins un type de média et au moins un premier paramètre de communication applicable à au moins un flux média dudit type, parmi ledit ensemble de flux média.

On présente ci-après trois exemples de syntaxe pour l'entête PEM modifié selon l'invention, permettant de spécifier que seuls les flux audio sont autorisés en bidirectionnel (émission/réception) pendant la phase d'établissement d'une communication, les flux vidéo étant interdits.

Selon un premier exemple, l'entête PEM modifié selon l'invention peut avoir la syntaxe suivante :
P-Early-Media: video=inactive

On précise ainsi un type de média (vidéo), et un « premier » paramètre de communication « spécifique », applicable aux flux média de ce type (inactive), parmi l'ensemble de flux média.

En variante, il est possible de préciser un « deuxième » paramètre de communication « global », applicable à l'ensemble de flux média.

Ainsi, selon un deuxième exemple, l'entête PEM modifié selon l'invention peut avoir la syntaxe suivante :
P-Early-Media: sendrecv;video=inactive

On précise ainsi un « deuxième » paramètre de communication applicable à l'ensemble de flux média (sendrecv, qui signifie que tous les flux sont autorisés en émission et en réception), puis un type de média (vidéo), et un « premier » paramètre de communication applicable aux flux média de ce type (inactive), qui précise, par média, une différence par rapport au paramètre « global » (i.e. qu'aucun flux de type vidéo n'est autorisé en émission ou en réception).

De façon équivalente, selon un troisième exemple, l'entête PEM modifié selon l'invention peut avoir la syntaxe suivante :
P-Early-Media: inactive;audio=sendrecv

On précise ainsi un « deuxième » paramètre de communication applicable à l'ensemble de flux média (inactive, qui signifie qu'aucun flux n'est autorisé en émission ou en réception), puis un type de média (audio), et un « premier » paramètre de communication applicable aux flux média de ce type (sendrecv), qui précise, par média, une différence par rapport au paramètre « global » (i.e. que tous les flux de type audio sont autorisés en émission et en réception).

Il est également possible d'ajouter, dans l'entête PEM, un paramètre d'identification permettant d'identifier un flux média particulier pour un type de média donné.

On dispose ainsi d'un degré de raffinement supplémentaire pour définir les paramètres de communication d'un flux.

Par exemple, on peut identifier un flux particulier, parmi un ensemble de flux média de même type, par le biais de son numéro de flux RTP, encore appelé « Payload Type ».

Ainsi, dans l'exemple précédent, si l'on souhaite, pour le média audio, indiquer que seul le flux audio relatif aux évènements téléphoniques DTMF (« telephone-event ») est autorisé en mode bidirectionnel, alors que les autres flux audio sont uniquement autorisés en diffusion (i.e. sens émission uniquement), l'entête PEM modifié selon l'invention peut avoir la syntaxe suivante :
P-Early-Media:audio=(110,sendrecv) ;video=inactive

On précise ainsi un premier type de média, le média audio, et un « premier » paramètre de communication audio (« sendrecv ») applicable à un flux média audio identifié par un paramètre d'identification (numéro de flux RTP : 110), et un deuxième type de média, le média vidéo, et un « premier » paramètre de communication vidéo (« inactive ») applicable à l'ensemble des flux média vidéo.

L'entête PEM modifié selon l'invention peut également avoir la syntaxe suivante :
P-Early-Media: sendonly;audio=(110,sendrecv);video=inactive

On indique ainsi que l'ensemble des flux média est autorisé en émission uniquement (« deuxième » paramètre de communication égal à « sendonly »), à l'exception du flux vidéo qui est non autorisé (« premier » paramètre de communication vidéo à « inactive ») et des évènements téléphoniques (le numéro de flux RTP 110 étant associé aux événements téléphoniques : « telephone-event, payload 110 ») qui sont bidirectionnels (« sendrecv »), par exemple pour pouvoir faire des sélections de choix via des DTMF avec un serveur interactif.

En variante, plutôt que d'utiliser le numéro de flux RTP pour identifier un flux particulier, on peut utiliser son nom ou tout autre identifiant. Par exemple, l'entête PEM modifié selon l'invention peut avoir la syntaxe suivante :
P-Early-Media: audio=(AMR,sendonly)
   ou encore :
P-Early-Media: inactive;audio=(AMR,sendonly)

On indique ainsi qu'aucun flux média n'est autorisé à l'exception du flux audio AMR en unidirectionnel.

### 5.3 Variantes

Selon l'exemple illustré en figure 2, l'entête P-Early-Media peut être inséré dans un message de réponse « 183 Session Progress ». Il s'agit bien entendu d'un simple exemple.

Comme indiqué dans le tableau 1 du document RFC 5009, l'entête PEM peut en variante être inséré dans les requêtes de type SIP de type « INVITE » (établissement d'une session), « PRACK » (accusé de réception provisionnel) ou « UPDATE » (modification de l'état d'une session), dans les messages de réponse 18x de type « INVITE », ou dans les messages de réponse 2xx de type « PRACK » ou « UPDATE ».

En particulier, l'entête PEM peut être inséré ou modifié par les proxys P-CSCF_orig ou P-CSCF_term, par les serveurs d'application AS_orig ou AS_term, par les serveur S-CSCF_orig ou S-CSCF_term, ou encore par la passerelle IBCF pour un appel vers un réseau tiers. En effet, ces différentes entités sont considérées comme des entités de confiance pour la session multimédia.

De façon plus générale, l'entête PEM peut être inséré ou modifié par toute entité de confiance du réseau.

Par ailleurs, l'invention n'est pas limitée aux réseaux IMS et au protocole de signalisation SIP. Elle peut être mise en œuvre pour toute session de communication mettant en œuvre une négociation d'un ensemble de flux média au cours d'une phase préalable à l'établissement d'une communication, pour l'échange de flux « early media ».

### 5.4 Structures

On présente finalement, en relation avec les figures 3 et 4, les structures simplifiées d'un terminal appelant et d'une entité du réseau localisée entre le terminal appelant et au moins un terminal appelé selon l'un des modes de réalisation décrits ci-dessus.

Comme illustré en figure 3, un tel terminal appelant comprend une mémoire 31 comprenant une mémoire tampon, une unité de traitement 32, équipée par exemple d'une machine de calcul reprogrammable ou d'une machine de calcul dédiée, par exemple un processeur P, et pilotée par le programme d'ordinateur 33, mettant en œuvre le procédé d'établissement d'une session multimédia selon un mode de réalisation de l'invention.

A l'initialisation, les instructions de code du programme d'ordinateur 33 sont par exemple chargées dans une mémoire RAM avant d'être exécutées par le processeur de l'unité de traitement 32.

Le processeur de l'unité de traitement 32 met en œuvre les étapes du procédé de d'établissement d'une session multimédia décrit précédemment, selon les instructions du programme d'ordinateur 33, pour sélectionner au moins un flux média à utiliser pour la session, à partir d'un entête spécifique tel que décrit précédemment.

Comme illustré en figure 4, une entité du réseau localisée entre le terminal appelant et au moins un terminal appelé comprend une mémoire 41 comprenant une mémoire tampon, une unité de traitement 42, équipée par exemple d'une machine de calcul reprogrammable ou d'une machine de calcul dédiée, par exemple un processeur P, et pilotée par le programme d'ordinateur 43, mettant en œuvre le procédé de gestion d'une session multimédia selon un mode de réalisation de l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée un message d'invitation, et génère une réponse portant un entête spécifique.

Le processeur de l'unité de traitement 42 met en œuvre les étapes du procédé d'établissement d'une session multimédia décrit précédemment, selon les instructions du programme d'ordinateur 43, pour insérer/modifier l'entête et contrôler ainsi les flux média autorisés pendant la phase d'établissement d'une communication.

## Revendications

1. Procédé de gestion d'une session multimédia entre un terminal appelant et au moins un terminal appelé, ladite session multimédia comprenant une phase préalable à l'établissement d'une communication et une phase de communication,
ledit procédé mettant en œuvre, pendant ladite phase préalable à l'établissement de la communication :
- la réception (21) d'un message d'invitation généré par un terminal appelant, ledit message d'invitation comprenant un champ de description de ladite session multimédia, portant des informations relatives à un ensemble de flux média, et
- la génération (22) d'une réponse audit message d'invitation,
**caractérisé en ce que** ladite réponse comprend un entête portant au moins un type de média et au moins un premier paramètre de communication applicable à au moins un flux média dudit type, parmi ledit ensemble de flux média, ledit premier paramètre de communication spécifiant si ledit au moins un flux média dudit type est autorisé ou interdit en émission et/ou en réception.

2. Procédé selon la revendication 1, **caractérisé en ce que** ledit entête porte également au moins un paramètre d'identification permettant d'identifier un flux média particulier parmi ledit au moins un flux média dudit type.

3. Procédé selon la revendication 2, **caractérisé en ce que** ledit paramètre d'identification appartient au groupe comprenant :
- un nom associé audit flux média ; et
- un numéro associé audit flux média.

4. Procédé selon l'une quelconque des revendications 1 à 3, **caractérisé en ce que** ledit entête porte également au moins un deuxième paramètre de communication, applicable audit ensemble de flux média.

5. Procédé selon l'une quelconque des revendications 1 à 4, **caractérisé en ce que** ledit premier paramètre de communication appartient au groupe comprenant :
- communication inactive ;
- communication en émission uniquement ;
- communication en réception uniquement ; et
- communication en émission et en réception.

6. Procédé selon l'une quelconque des revendications 1 à 5, **caractérisé en ce que** ledit entête est de type P-Early-Media selon le protocole SIP.

7. Procédé d'établissement d'une session multimédia entre un terminal appelant et au moins un terminal appelé, ladite session multimédia comprenant une phase préalable à l'établissement d'une communication et une phase de communication,
ledit procédé mettant en œuvre, pendant ladite phase préalable à l'établissement de la communication :
- la génération (11) d'un message d'invitation comprenant un champ de description de ladite session multimédia, portant des informations relatives à un ensemble de flux média, et
- la réception (12) d'une réponse audit message d'invitation,
**caractérisé en ce que** ledit procédé met également en œuvre la sélection (13) d'au moins un flux média à utiliser pendant la phase préalable à l'établissement de la communication, en tenant compte d'un entête de ladite réponse portant au moins un type de média et au moins un premier paramètre de communication applicable à au moins un flux média dudit type, parmi ledit ensemble de flux média, ledit premier paramètre de communication spécifiant si ledit au moins un flux média dudit type est autorisé ou interdit en émission et/ou en réception..

8. Entité de gestion d'une session multimédia entre un terminal appelant et au moins un terminal appelé, ladite session multimédia comprenant une phase préalable à l'établissement d'une communication et une phase de communication,
ladite entité comprenant une machine de calcul reprogrammable ou une machine de calcul dédiée configurée pour :
- recevoir un message d'invitation généré par un terminal appelant, ledit message d'invitation comprenant un champ de description de ladite session multimédia, portant des informations relatives à un ensemble de flux média, et
- générer une réponse audit message d'invitation,
**caractérisée en ce que** ladite réponse comprend un entête portant au moins un type de média et au moins un premier paramètre de communication applicable, pendant ladite phase préalable à l'établissement de la communication, à au moins un flux média dudit type, parmi ledit ensemble de flux média, ledit premier paramètre de communication spécifiant si ledit au moins un flux média dudit type est autorisé ou interdit en émission et/ou en réception.

9. Terminal appelant destiné à établir une session multimédia avec au moins un terminal appelé, ladite session multimédia comprenant une phase préalable à l'établissement d'une communication et une phase de communication,
ledit terminal comprenant une machine de calcul reprogrammable ou une machine de calcul dédiée configurée pour :
- générer un message d'invitation comprenant un champ de description de ladite session multimédia, portant des informations relatives à un ensemble de flux média, et
- recevoir une réponse audit message d'invitation,
**caractérisé en ce que** ladite machine de calcul est également configurée pour sélectionner au moins un flux média à utiliser pendant ladite phase préalable à l'établissement de la communication, en tenant compte d'un entête de ladite réponse portant au moins un type de média et au moins un premier paramètre de communication applicable à au moins un flux média dudit type, parmi ledit ensemble de flux média, ledit premier paramètre de communication spécifiant si ledit au moins un flux média dudit type est autorisé ou interdit en émission et/ou en réception.

10. Programme d'ordinateur comportant des instructions pour la mise en œuvre d'un procédé selon l'une quelconque des revendications 1 à 7 lorsque ce programme est exécuté par un processeur.

11. Support d'informations, inamovible, ou partiellement ou totalement amovible, lisible par un ordinateur, et comportant des instructions d'un ou plusieurs programmes d'ordinateur pour l'exécution des étapes d'au moins un procédé selon l'une quelconque des revendications 1 à 7.

## Patentansprüche

1. Verfahren zur Verwaltung einer Multimediasitzung zwischen einem anrufenden Endgerät und mindestens einem angerufenen Endgerät, wobei die Multimediasitzung eine Verbindungsaufbau-Vorphase und eine Verbindungsphase umfasst,
wobei das Verfahren während der Verbindungsaufbau-Vorphase ausführt:
- das Empfangen (21) einer von einem anrufenden Endgerät erzeugten Einladungsnachricht, wobei die Einladungsnachricht ein Feld zur Beschreibung der Multimediasitzung umfasst, das Informationen zu einer Menge von Medienströmen enthält, und
- das Erzeugen (22) einer Antwort auf die Einladungsnachricht,
**dadurch gekennzeichnet, dass** die Antwort einen Header umfasst, der mindestens einen Medientyp und mindestens einen ersten Verbindungsparameter, der für mindestens einen Medienstrom des Typs unter der Menge von Medienströmen gilt, enthält, wobei der erste Verbindungsparameter angibt, ob der mindestens eine Medienstrom des Typs für das Senden und/oder Empfangen zugelassen oder gesperrt ist.

2. Verfahren nach Anspruch 1, **dadurch gekennzeichnet, dass** der Header auch mindestens einen Identifizierungsparameter enthält, der es ermöglicht, einen besonderen Medienstrom unter dem mindestens einen Medienstrom des Typs zu identifizieren.

3. Verfahren nach Anspruch 2, **dadurch gekennzeichnet, dass** der Identifizierungsparameter der Gruppe angehört, die umfasst:
- einen Namen, der dem Medienstrom zugewiesen ist; und
- eine Nummer, die dem Medienstrom zugewiesen ist.

4. Verfahren nach einem der Ansprüche 1 bis 3, **dadurch gekennzeichnet, dass** der Header auch mindestens einen zweiten Verbindungsparameter enthält, der für die Menge von Medienströmen gilt.

5. Verfahren nach einem der Ansprüche 1 bis 4, **dadurch gekennzeichnet, dass** der erste Verbindungsparameter der Gruppe angehört, die umfasst:
- inaktive Verbindung;
- Verbindung nur sendend;
- Verbindung nur empfangend; und
- Verbindung sendend und empfangend.

6. Verfahren nach einem der Ansprüche 1 bis 5, **dadurch gekennzeichnet, dass** der Header vom Typ P-Early-Media nach dem Protokoll SIP ist.

7. Verfahren zum Aufbauen einer Multimediasitzung zwischen einem anrufenden Endgerät und mindestens einem angerufenen Endgerät, wobei die Multimediasitzung eine Verbindungsaufbau-Vorphase und eine Verbindungsphase umfasst,
wobei das Verfahren während der Verbindungsaufbau-Vorphase ausführt:
- das Erzeugen (11) einer Einladungsnachricht, die ein Feld zur Beschreibung der Multimediasitzung umfasst, das Informationen zu einer Menge von Medienströmen enthält, und
- das Empfangen (12) einer Antwort auf die Einladungsnachricht,
**dadurch gekennzeichnet, dass** das Verfahren auch das Auswählen (13) mindestens eines Datenstroms ausführt, der während der Verbindungsaufbau-Vorphase zu verwenden ist, unter Berücksichtigung eines Headers der Antwort, der mindestens einen Medientyp und mindestens einen ersten Verbindungsparameter, der für mindestens einen Medienstrom des Typs unter der Menge von Medienströmen gilt, enthält, wobei der erste Verbindungsparameter angibt, ob der mindestens eine Medienstrom des Typs für das Senden und/oder Empfangen zugelassen oder gesperrt ist.

8. Vorrichtung zur Verwaltung einer Multimediasitzung zwischen einem anrufenden Endgerät und mindestens einem angerufenen Endgerät, wobei die Multimediasitzung eine Verbindungsaufbau-Vorphase und eine Verbindungsphase umfasst,
wobei die Vorrichtung eine umprogrammierbare Rechenmaschine oder eine dedizierte Rechenmaschine umfasst, die dazu konfiguriert ist:
- eine von einem anrufenden Endgerät erzeugte Einladungsnachricht zu empfangen, wobei die Einladungsnachricht ein Feld zur Beschreibung der Multimediasitzung umfasst, das Informationen zu einer Menge von Medienströmen enthält, und
- eine Antwort auf die Einladungsnachricht zu erzeugen, **dadurch gekennzeichnet, dass** die Antwort einen Header umfasst, der mindestens einen Medientyp und mindestens einen ersten Verbindungsparameter, der während der Verbindungsaufbau-Vorphase für mindestens einen Medienstrom des Typs unter der Menge von Medienströmen gilt, enthält, wobei der erste Verbindungsparameter angibt, ob der mindestens eine Medienstrom des Typs für das Senden und/oder Empfangen zugelassen oder gesperrt ist.

9. Anrufendes Endgerät, das dazu bestimmt ist, eine Multimediasitzung mit mindestens einem angerufenen Endgerät aufzubauen, wobei die Multimediasitzung eine Verbindungsaufbau-Vorphase und eine Verbindungsphase umfasst,
wobei das Endgerät eine umprogrammierbare Rechenmaschine oder eine dedizierte Rechenmaschine umfasst, die dazu konfiguriert ist:
- eine Einladungsnachricht zu erzeugen, die ein Feld zur Beschreibung der Multimediasitzung umfasst, das Informationen zu einer Menge von Medienströmen enthält, und
- eine Antwort auf die Einladungsnachricht zu empfangen, **dadurch gekennzeichnet, dass** die Rechenmaschine auch dazu konfiguriert ist, mindestens einen Medienstrom auszuwählen, der während Verbindungsaufbau-Vorphase zu verwenden ist, unter Berücksichtigung eines Headers der Antwort, der mindestens einen Medientyp und mindestens einen ersten Verbindungsparameter, der für mindestens einen Medienstrom des Typs unter der Menge von Medienströmen gilt, enthält, wobei der erste Verbindungsparameter angibt, ob der mindestens eine Medienstrom des Typs für das Senden und/oder Empfangen zugelassen oder gesperrt ist.

10. Computerprogramm, das Befehle beinhaltet, die bei der Ausführung dieses Programms durch einen Prozessor ein Verfahren nach einem der Ansprüche 1 bis 7 ausführen.

11. Datenträger, der nicht entnehmbar oder teilweise oder vollständig entnehmbar ist, computerlesbar ist und Befehle eines oder mehrerer Computerprogramme zum Ausführen der Schritte mindestens eines Verfahrens nach einem der Ansprüche 1 bis 7 beinhaltet.

## Claims

1. Method for managing a multimedia session between a calling terminal and at least one called terminal, said multimedia session comprising a phase prior to setup of a communication and a communication phase,
said method implementing, during said phase prior to setup of the communication:
- receipt (21) of an invite message generated by a calling terminal, said invite message comprising a description field describing said multimedia session and containing information relative to a set of media streams, and
- generation (22) of a reply to said invite message,
**characterized in that** said reply comprises a header containing at least one type of media and at least one first communication parameter applicable to at least one media stream of said type, among said set of media streams, said first communication parameter specifying whether said at least one media stream of said type is permitted or forbidden to be sent and/or received.

2. Method according to Claim 1, **characterized in that** said header also contains at least one identification parameter allowing a particular media stream among said at least one media stream of said type to be identified.

3. Method according to Claim 2, **characterized in that** said identification parameter belongs to the group comprising:
- a name associated with said media stream; and
- a number associated with said media stream.

4. Method according to any one of Claims 1 to 3, **characterized in that** said header also contains at least one second communication parameter applicable to said set of media streams.

5. Method according to any one of Claims 1 to 4, **characterized in that** said first communication parameter belongs to the group comprising:
- inactive communication;
- send-only communication;
- receive-only communication; and
- send-receive communication.

6. Method according to any one of Claims 1 to 5, **characterized in that** said header is a P-Early-Media header according to the SIP protocol.

7. Method for setting up a multimedia session between a calling terminal and at least one called terminal, said multimedia session comprising a phase prior to setup of a communication and a communication phase,
said method implementing, during said phase prior to setup of the communication:
- generation (11) of an invite message comprising a description field describing said multimedia session and containing information relative to a set of media streams, and
- receipt (12) of a reply to said invite message,
**characterized in that** said method also implements selection (13) of at least one media stream to be used during the phase prior to setup of the communication, taking into account a header of said reply containing at least one type of media and at least one first communication parameter applicable to at least one media stream of said type, among said set of media streams, said first communication parameter specifying whether said at least one media stream of said type is permitted or forbidden to be sent and/or received.

8. Entity for managing a multimedia session between a calling terminal and at least one called terminal, said multimedia session comprising a phase prior to setup of a communication and a communication phase,
said entity comprising a reprogrammable computing machine or a dedicated computing machine configured to:
- receive an invite message generated by a calling terminal, said invite message comprising a description field describing said multimedia session and containing information relative to a set of media streams, and
- generate a reply to said invite message,
**characterized in that** said reply comprises a header containing at least one type of media and at least one first communication parameter applicable, during said phase prior to setup of the communication, to at least one media stream of said type, among said set of media streams, said first communication parameter specifying whether said at least one media stream of said type is permitted or forbidden to be sent and/or received.

9. Calling terminal intended to set up a multimedia session with at least one called terminal, said multimedia session comprising a phase prior to setup of a communication and a communication phase,
said terminal comprising a reprogrammable computing machine or a dedicated computing machine configured to:
- generate an invite message comprising a description field describing said multimedia session and containing information relative to a set of media streams, and
- receive a reply to said invite message,
**characterized in that** said computing machine is also configured to select at least one media stream to be used during said phase prior to setup of the communication, taking into account a header of said reply containing at least one type of media and at least one first communication parameter applicable to at least one media stream of said type, among said set of media streams, said first communication parameter specifying whether said at least one media stream of said type is permitted or forbidden to be sent and/or received.

10. Computer program comprising instructions for implementing a method according to any one of Claims 1 to 7 when this program is executed by a processor.

11. Irremovable, or partially or completely removable, computer-readable data medium comprising the instructions of one or more computer programs for executing the steps of a least one method according to any one of Claims 1 to 7.
